# EUROPÄISCHE PATENTANMELDUNG

(11) **EP 3 858 124 A1**
(43) Veröffentlichungstag der Anmeldung: **04.08.2021**
(21) Anmeldenummer: 21401004.3
(22) Anmeldetag: 26.01.2021
(51) Int. Cl.: A01B 29/04

(54) **UNTERTEILTE WALZE NACH ART EINES REIFENPACKERS**

(30) Priorität: 29.01.2020 DE 102020102067
(71) Anmelder: Amazonen-Werke H. Dreyer SE & Co. KG, 49205 Hasbergen (DE)
(72) Erfinder: Helms, Helge, 26125 Oldenburg (DE)

(57) **Zusammenfassung**

Unterteilte Walze (20) nach Art eines Reifenpackers für ein landwirtschaftliches Arbeitsgerät (10), insbesondere Bodenbearbeitungsgerät und/oder Verteilmaschine, umfassend mehrere in Reihe nebeneinander angeordnete Räder (21), wobei ein Rad (21) zumindest ein inneres Radelement (210) und zumindest einen von außen an einem Radelement (210) angeordneten Mantel (211) aufweist, zumindest eine quer zu einer Fahrtrichtung (F) ausgerichtete drehbare Achse (22) mit der zumindest ein Rad (21), vorzugsweise drehfest, über zumindest ein an der Achse (22) angeordnetes Flanschelement (23) koppelbar ist, zumindest einen Rahmen (24), wobei die zumindest eine Achse (22) mittels wenigstens einer Schwinge (25) mit dem Rahmen (24) verbunden ist. Um eine unterteilte Walze (20) nach Art eines Reifenpackers so zu gestalten, dass die Montage und/oder Herstellung der unterteilten Walze (20) besonders einfach und/oder kostengünstig ausgebildet ist und/oder eine hohe Anzahl an Räder (21), insbesondere mit zusätzlicher Bremseinheit (26), möglichst platzsparend an einer Achse (22) montierbar sind, ist vorgesehen, dass zumindest ein inneres Radelement (210) zumindest eines Rads (21) eine größere Breite aufweist als der zumindest eine Mantel (211), dass zumindest zwei Räder (21) gemeinsam über zumindest ein Flanschelement (23) mit der Achse (22) koppelbar sind.

## Beschreibung

Die Erfindung betrifft eine unterteilte Walze nach Art eines Reifenpackers für ein landwirtschaftliches Arbeitsgerät gemäß dem Oberbegriff des Patentanspruches 1 und ein landwirtschaftliches Arbeitsgerät gemäß dem Oberbegriff des Patentanspruches 14.

In einer Vielzahl von Anwendungsfällen, insbesondere in der Landwirtschaft, werden zur Bearbeitung einer landwirtschaftlichen Fläche als Bodenbearbeitungsgeräte und/oder Verteilmaschinen ausgebildete landwirtschaftliche Arbeitsgeräte eingesetzt. Das landwirtschaftliche Arbeitsgerät umfasst hierbei üblicherweise ein zumindest teilweise in den Boden eingreifendes Bodenbearbeitungswerkzeug das dazu eingerichtet ist, die landwirtschaftliche Fläche, insbesondere den Ackerboden, zumindest teilweise aufzulockern und somit für einen darauffolgenden Arbeitsschritt vorzubereiten. Mittels einer nach Art eines Reifenpackers ausgebildeten unterteilten Walze ist das oder ein weiteres Arbeitsgerät dazu eingerichtet, die landwirtschaftliche Fläche, insbesondere den aufgelockerten Ackerboden, zumindest teilweise wieder zu verdichten. Die dabei erreichbare Rückverdichtung des Bodens erlaubt unter anderem eine verbesserte Durchlüftung und/oder vereinfachte Aussaat von ablegbarem granularem Material, insbesondere Saatgut und/oder Dünger.

Typischerweise weisen derartig unterteilte Walzen nach Art eines Reifenpackers mehrere nebeneinander angeordnete Räder auf, die vorzugsweise jeweils als Metallscheiben und/oder Kunststoffreifen, insbesondere Gummireifen, ausgebildet sind. Als Kunststoffreifen, insbesondere Gummireifen, ausgebildete Räder können hierbei zumindest einen beispielsweise aus Vollmaterial ausgebildeten und/oder mit Druckluft beaufschlagbaren Mantel umfassen. Der Mantel ist hierbei von außen an zumindest einem inneren Reifenelement, das insbesondere nach Art einer Reifenfelge ausgebildet ist, angeordnet. Die landwirtschaftliche Fläche, insbesondere der aufgelockerte Ackerboden, ist dabei in Abhängigkeit eines, vorzugsweise einstellbaren, Anpressdrucks zwischen dem Mantel und dem Boden, insbesondere innerhalb eines Bearbeitungsstreifens der jeweiligen Räder, zumindest teilweise verdichtbar.

Eine derartige unterteilte Walze nach Art eines Reifenpackers ist in der DE 10 2010 037 843 A1 beschrieben. Diese umfasst mehrere in Reihe nebeneinander angeordnete Räder, wobei ein Rad zumindest ein inneres Radelement und zumindest ein von außen an dem Radelement angeordneten Mantel aufweist. Darüber hinaus umfasst die Walze zumindest eine quer zur Fahrtrichtung ausgerichtete drehbare Achse mit der zumindest ein Rad, vorzugsweise drehfest, über zumindest ein an der Achse angeordnetes Flanschelement koppelbar ist. Die zumindest eine Achse ist dabei mittels wenigstens einer Schwinge mit einem Rahmen, der vorzugsweise der unterteilten Walze zugeordnet ist, verbunden.

Zur Verzögerung des Arbeitsgerätes, insbesondere der Walze, umfassen derartige Walzen alternativ oder zusätzlich zumindest eine im Bereich eines, insbesondere äußeren, Rads angeordnete Bremseinheit. Eine derartige Bremseinheit ist beispielsweise in der DE 10 2014 106 953 A1 beschrieben.

Nachteilig an derartigen Aufbauten ist unter anderem, dass nur ein Rad über ein Flanschelement an der zumindest einen Achse koppelbar ist. Dies wiederrum erfordert bei einer großen Arbeitsbreite der Walze und damit einer hohen Anzahl von Rädern eine hohe Anzahl von an der Achse angeordneten Flanschelementen. Somit resultiert insbesondere ein hoher Montage- und/oder Herstellungsaufwand der unterteilten Walze. Darüber hinaus ist die mögliche Anzahl von Rädern auf einer gemeinsamen Achse deutlich beschränkt. Zur Montage von mehr als zwei Rädern auf einer gemeinsamen Achse sind im Stand der Technik unterteilte Walzen bekannt, die Räder mit zumindest teilweise unterschiedlichen inneren Radelementen und Achsen mit zumindest teilweise unterschiedlichen Flanschelementen aufweisen. Hierbei können einzelne Räder mit entsprechendem inneren Radelement zumindest teilweise an wenigstens einem ersten Flanschelement vorbei auf die Achse aufgefädelt und an einem darauf abgestimmten Flanschelement montiert werden. Diese Ausführungsvariante bedingt jedoch einen besonders hohen Konstruktions- und/oder Montageaufwand der Räder und/oder der Flanschelemente. Des Weiteren weist diese Ausführungsvariante den Nachteil auf, dass aufgrund der aufeinander abgestimmten Räder, insbesondere innere Radelemente, und Flanschelemente die Anzahl der vorzuhaltenden Räder, insbesondere zu Wartungs- und/oder Reparaturzwecken, und somit die Kosten besonders hoch sind.

Darüber hinaus weisen derartig ausgebildete Aufbauten, insbesondere Walzen mit zumindest einer Bremseinheit, einen besonders hohen Platzbedarf, insbesondere zur Unterbringung der zumindest Bremseinheit, auf. Zusätzlich zum Platzbedarf ist bei einer an der Walze angeordneten Bremseinheit außerdem eine zumindest teilweise abweichende Geometrie zumindest einer Achse erforderlich, wodurch der Konstruktions- und/oder Montageaufwand weiter gesteigert ist.

Die der Erfindung zugrunde liegende Aufgabe besteht somit darin, eine unterteilte Walze nach Art eines Reifenpackers so zu gestalten, dass die Montage und/oder Herstellung der unterteilten Walze besonders einfach und/oder kostengünstig ausgebildet ist und/oder eine hohe Anzahl an Räder, insbesondere mit zusätzlicher Bremseinheit, möglichst platzsparend an einer Achse montierbar sind. Der Erfindung liegt ferner die Aufgabe zu Grunde ein landwirtschaftliches Arbeitsgerät mit zumindest einer unterteilten Walze nach Art eines Reifenpackers anzugeben.

Diese Aufgabe wird erfindungsgemäß dadurch gelöst, dass zumindest ein inneres Radelement zumindest eines Rads eine größere Breite aufweist als der zumindest eine Mantel, wobei zumindest zwei Räder gemeinsam über zumindest ein Flanschelement mit der Achse koppelbar sind. Im Hinblick auf das landwirtschaftliche Arbeitsgerät wird die Aufgabe durch den Gegenstand des Anspruches 14 gelöst.

Infolge dieser Maßnahme ist die Anordnung von zumindest zwei Räder mit wenigstens einer Verbindung zwischen zumindest einem inneren Radelement und zumindest einem Flanschelement an einer, vorzugsweise gemeinsamen, Achse realisierbar. Die Verbindung ist hierbei mittels zumindest einer Schraubverbindung ausgebildet, wobei alternativ oder zusätzlich eine form- und/oder kraftschlüssige Verbindung ebenfalls denkbar ist. Mittels der gemeinsam nutzbaren Verbindung zumindest zweier Räder ist eine besonders einfache und/oder effiziente Montage auf der Achse, insbesondere dem Flanschelement, erreicht. Darüber hinaus ist der zumindest eine Mantel eines Rads bevorzugt auf einer Seite, insbesondere außer mittig, an dem inneren Radelement angeordnet. Der Mantel ist dabei in einer aus dem Stand der Technik bekannten und/oder üblichen Weise auf dem inneren Radelement aufgezogen. Hierbei sind des Weiteren form- und/oder kraftschlüssige, insbesondere Klemm-, Verbindungen und/oder stoffschlüssige, insbesondere Klebe-, Verbindungen zwischen dem zumindest einen Mantel und dem inneren Radelement denkbar.

Darüber hinaus sind alternativ oder zusätzlich mehrere Mäntel an zumindest einem inneren Radelement anordenbar.

Erfindungsgemäß ist ein zumindest teilweise kreisbögenförmiges, vorzugsweise konzentrisch, an der Achse angeformtes Flanschelement besonders bevorzugt. Das Flanschelement kann ferner eine zumindest teilweise polygonförmige, beispielsweise eckige und/oder sternförmige Form, aufweisen. Alternativ oder zusätzlich ist das Flanschelement form- und/oder kraft- und/oder stoffschlüssig mit der Achse verbindbar.

Des Weiteren ist eine zumindest beidseitige Lagerung der Achse vorteilhaft, bei der ein erstes Ende der Achse mit zumindest einer ersten Schwinge und/oder ein zweites Ende der Achse mit zumindest einer zweiten Schwinge, insbesondere über zumindest eine Lagerung, und somit mit dem Rahmen gekoppelt ist. Darüber hinaus ist zumindest eine, vorzugsweise zwischen der ersten und zweiten Schwinge angeordnete, weitere Schwinge denkbar über die die zumindest eine Achse zusätzlich gelagert ist. Ferner ist zumindest ein Rahmen der Walze bevorzugt der, vorzugsweise um eine Schwenkachse quer zur Fahrtrichtung, zumindest teilweise verschwenkbar ist. Bei einer solchen Ausgestaltung ist die Walze, insbesondere Achse, zumindest teilweise von einer in Betrieb- in eine Außerbetriebstellung verfahrbar. Die Schwenkachse ist hierbei bevorzugt in Fahrtrichtung vor oder hinter der Walze angeordnet.

In einer bevorzugten Ausführungsform der erfindungsgemäßen Walze sind die inneren Radelemente von zumindest zwei Rädern zumindest teilweise, vorzugsweise gegenüberliegend, aneinander anlegbar. Hierbei sind zumindest zwei spiegelsymmetrisch aneinander anlegbare Räder besonders bevorzugt. Die inneren Radelemente eines ersten und zweiten Rads sind dabei direkt aneinander angelegt. Daraus resultiert eine besonders platzsparende Ausführungsvariante mit besonders betriebssicherer Kraftübertragung zwischen dem zumindest einen Flanschelement und den inneren Radelementen der zumindest zwei aneinander anlegbaren Räder. Die aneinander anlegbaren Räder sind alternativ oder zusätzlich form- und/oder kraft- und/oder stoffschlüssig miteinander verbindbar. Besonders bevorzugt ist eine zerstörungsfreie und/oder reversible Verbindung, die beispielsweise mittels zumindest einer Schraubverbindung realisierbar ist.

Darüber hinaus ist wenigstens ein zumindest teilweise zwischen den inneren Radelementen und/oder dem zumindest einen Flanschelement angeordnetes Zwischenelement bevorzugt das dazu eingerichtet ist, Vibrationen die durch die Räder übertragbar sind zumindest teilweise zu dämpfen. Somit sind zwischen den inneren Radelementen und/oder dem zumindest einen Flanschelement übertragbare, insbesondere mechanische, Belastungen zumindest teilweise reduzierbar. Das Zwischenelement ist hierbei aus einem, vorzugsweise elastischen, Kunststoffmaterial, insbesondere Gummimaterial, ausgebildet.

In einer Weiterbildung der erfindungsgemäßen Walze ist die Breite zumindest eines inneren Radelementes derartig ausgebildet, dass die Mäntel zumindest zweier gemeinsam an einem Flanschelement koppelbarer Räder zumindest teilweise mit einem ersten Abstand zueinander, vorzugsweise quer zur Fahrtrichtung, beabstandet sind. Der Abstand der beiden gegenüberliegenden Mäntel ist dabei derartig gewählt, dass ein Kontakt der beiden Mäntel, insbesondere während einer elastischen Verformung zumindest eines Mantels während der Bearbeitung des Bodens, zumindest nahezu ausgeschlossen ist. Somit ist eine zumindest nahezu störungsfreie Bearbeitung der landwirtschaftlichen Fläche, insbesondere des Ackerbodens, zwischen den zumindest zwei gegenüberliegenden Räder erreicht.

In einer anderen bevorzugten Ausführungsform der erfindungsgemäßen Walze weisen zumindest zwei Mäntel, die wenigstens jeweils einem Flanschelement zugeordnet sind, einen zweiten Abstand zueinander auf, wobei der zweite Abstand zumindest im Wesentlichen dem ersten Abstand entspricht. Somit resultiert ein zumindest nahezu übereinstimmender Abstand der einzelnen Räder, insbesondere deren Bearbeitungsstreifen, über zumindest nahezu der gesamten Arbeitsbreite des Arbeitsgeräts.

Alternativ oder zusätzlich kann zumindest ein zweiter Abstand zweier benachbarter an jeweils einem Flanschelement montierbarer Räder ausgebildet sein der sich zumindest teilweise von zumindest einem ersten Abstand unterscheidet. Somit sind die innerhalb einer Walze angeordneten Räder individuell über der Arbeitsbreite der Walze, insbesondere des Arbeitsgerätes, anpassbar und eine besonders große oder kleine Arbeitsbreite erreichbar.

Des Weiteren ist ein erster und/oder zweiter Abstand besonders bevorzugt der zumindest im Wesentlichen der aus dem Mantel ragenden doppelten Breite des zumindest einen inneren Radelementes entspricht.

Ferner ist ein innerhalb des ersten und/oder zweiten Abstandes zweier benachbarter Räder eingebrachter, vorzugsweise zumindest teilweise elastischer, Füllstoff denkbar. Der Füllstoff ist hierbei, vorzugsweise konzentrisch, in radialer Richtung um die Achse und/oder der aneinander anlegbaren inneren Radelemente angeordnet. Der Füllstoff ist hierbei zumindest teilweise aus einem Kunststoffmaterial, insbesondere einem Gummimaterial, ausgebildet, wobei ein zumindest teilweiser metallischer Füllstoff ebenfalls denkbar ist. Mittels des Füllstoffs ist der Freiraum zwischen zwei voneinander beabstandeter Räder zumindest teilweise reduzierbar, womit ein zumindest teilweise geringeres Volumen an Verschmutzungen, insbesondere zumindest teilweise feuchtem Ackerboden, zwischen den zumindest zwei Rädern, insbesondere Mänteln, einbringbar ist.

In einer anderen Weiterbildung der erfindungsgemäßen Walze weist zumindest eine Achse zumindest zwei Flanschelemente auf, wobei zumindest vier Räder mit der zumindest einen Achse koppelbar sind. Alternativ oder zusätzlich umfasst die Walze hierbei zumindest eine weitere Achse mit zumindest einem Flanschelement und zumindest einem Rad. Darüber hinaus ist alternativ oder zusätzlich zumindest eine Achse innerhalb der Walze denkbar, die zumindest zwei Flanschelemente aufweist, wobei mit den zumindest zwei Flanschelementen jeweils eine unterschiedliche Anzahl an Rädern verbunden ist. Mit dieser Ausführungsvariante ist die Arbeitsbreite, insbesondere die Breite zumindest einer Achse, besonders variabel anpassbar.

In einer weiteren bevorzugten Ausführungsform der erfindungsgemäßen Walze sind zumindest zwei der zumindest vier Räder zu einem an zumindest einem Flanschelement anordenbaren Radpaar zusammengefasst, wobei das zumindest eine Radpaar an einer Seite eines ersten Flanschelementes anlegbar ist, die von zumindest einem weiteren an der Achse angeordneten Flanschelement abgewandt ist. Ein zusammengefasstes Radpaar weist hierbei zumindest zwei aneinander anlegbare innere Radelemente auf. Alternativ oder zusätzlich sind die zumindest zwei aneinander anlegbaren inneren Radelemente zumindest teilweise zu einem Körper zusammenfassbar. Besonders bevorzugt ist ein erstes Radpaar das über ein erstes Ende der Achse und zweites Radpaar das über ein zweites Ende der Achse aufziehbar und/oder montierbar ist. Mittels dieser Ausführungsform ist eine besonders kurzfristige und/oder einfache Montage der Radpaare, insbesondere der Räder, erreichbar.

In einer weiteren Weiterbildung der erfindungsgemäßen Walze sind zumindest zwei Räder, insbesondere Radelemente, die vorzugsweise gemeinsam an zumindest einem Flanschelement koppelbar sind, zumindest teilweise als Gleichteile ausgebildet. Die Gleichteile weisen hierbei eine zumindest nahezu vollständig übereinstimmende Form und/oder übereinstimmendes Material auf. Die Räder, insbesondere Radelemente, sind dabei in einem zumindest nahezu gleichen Spektrum belastbar. Somit ist neben einer besonders homogenen Bearbeitung der landwirtschaftlichen Fläche, insbesondere des Ackerbodens, außerdem die Betriebssicherheit der Walze, insbesondere der Räder, gesteigert. Darüber hinaus ist mit dieser Ausführungsvariante eine besonders einfache und/oder kostengünstige Herstellung der erfindungsgemäßen Walze, insbesondere der Räder, erreicht, die des Weiteren nur eine geringe Anzahl an vorzuhaltenden Rädern, insbesondere Radelementen, beispielsweise zu Reparaturzwecken, erfordert.

Darüber hinaus ist eine erfindungsgemäße Walze bevorzugt bei der zumindest einer Achse zumindest eine Bremseinheit zugeordnet ist die dazu eingerichtet ist, die Achse zumindest teilweise zu verzögern, wobei die Bremseinheit mit einer ersten Seite an zumindest einer Schwinge und/oder mit einer zweiten Seite an zumindest einem Rad, insbesondere Radelement, und/oder Flanschelement angeordnet ist. Die Schwinge ist hierbei zumindest nahezu starr mit dem wenigstens einen Rahmen der unterteilten Walze verbunden. Ferner ist die Bremseinheit über zumindest eine Schraubverbindung, vorzugsweise zumindest teilweise drehbar, mit zumindest einem Rad, insbesondere Radelement, und/oder zumindest einem Flanschelement verbindbar. Mittels der Bremseinheit ist somit die Energie zur Verzögerung der Walze, insbesondere zumindest einer Achse, zumindest teilweise in den Rahmen übertragbar.

Besonders bevorzugt ist eine Bremseinheit die den äußersten Räder der Walze zugeordnet sind, wobei die Walze derartig ausgebildet, insbesondere konfiguriert, ist, dass eine zumindest teilweise höhere Gewichtskraft der Walze über die äußersten Räder übertragbar ist.

Die zumindest eine Bremseinheit ist alternativ oder zusätzlich dazu eingerichtet, die zumindest eine Achse und/oder das zumindest ein Rad mit der Schwinge und/oder dem Rahmen zu koppeln. Die Rotationsachse eines sich zumindest teilweise drehbaren Abschnitts der Bremseinheit ist dabei vorzugsweise korrespondierend zur Rotationsachse der zumindest einen Achse und/oder des zumindest einen Rads ausgebildet.

Ferner ist eine erfindungsgemäße Walze bevorzugt bei der die zumindest eine Bremseinheit mit zumindest einem, vorzugsweise zumindest teilweise vom ersten Flanschelement abweichenden, zweiten Flanschelement auf der Achse gekoppelt ist. Das zumindest eine zweite Flanschelement unterscheidet sich hierbei vorzugsweise zumindest teilweise in den Abmessungen und/oder der Form und/oder des Materials vom zumindest einen ersten Flanschelement.

In einer anderen bevorzugten Ausführungsform der erfindungsgemäßen Walze ist die Bremseinheit zumindest teilweise, vorzugsweise zumindest nahezu vollständig, innerhalb wenigstens eines inneren Radelementes angeordnet. Das innere Radelement bildet hierbei eine zumindest nahezu vollständige radiale Umschließung der Bremseinheit. Somit ist die Bremseinheit besonders platzsparend und/oder sicher vor äußeren Einflüssen und/oder Verschmutzungen angeordnet.

Bei einer besonders bevorzugten Ausführungsform der erfindungsgemäßen Walze umfasst die Bremseinheit zumindest ein, vorzugsweise zumindest teilweise starr, mit der Schwinge gekoppeltes Distanzelement und/oder Ankerelement und zumindest eine, vorzugsweise zumindest teilweise drehbare, Bremstrommel die mit zumindest einem Flanschelement und/oder Rad, insbesondere Radelement, gekoppelt ist. Die Symmetrieachse des zumindest einen Distanzelementes und/oder Ankerelementes und/oder der Bremstrommel ist hierbei zumindest im Wesentlichen korrespondierend zur Rotationsachse der Achse ausgebildet. Hierbei ist eine Anordnung besonders bevorzugt bei der das Distanzelement an der Schwinge und das Ankerelement, vorzugsweise starr, zwischen dem Distanzelement und der Bremstrommel angeordnet ist. Die Bremseinheit, insbesondere die Bremstrommel, ist hierbei dazu eingerichtet, die, insbesondere rotierend antreibbare, Achse zumindest teilweise Drehmomentübertragend mit dem Distanzelement und/oder Ankerelement, insbesondere der Schwinge, zu koppeln. Mittels dieser Ausführungsvariante sind besonders kurze Hebellänge der einleitbaren Bremskraft und der Achse erreicht.

Ferner ist eine alternative Ausführungsform der erfindungsgemäßen Walze besonders bevorzugt bei der eine Bremseinheit zumindest ein, vorzugsweise zumindest teilweise starr, mit der Schwinge gekoppeltes Ankerelement und zumindest eine, vorzugsweise zumindest teilweise drehbare, Bremstrommel und/oder zumindest ein, vorzugsweise zumindest teilweise drehbares, Distanzelement, welche mit zumindest einem Flanschelement und/oder Rad, insbesondere Radelement, gekoppelt sind umfasst. Besonders bevorzugt ist eine Anordnung bei der die Bremstrommel zwischen dem Ankerelement und dem Distanzelement angeordnet ist, wobei das Ankerelement kraft- und/oder formschlüssig, insbesondere mittels zumindest einer Schraubverbindung, mit der Schwinge verbunden ist. Das Distanzelement und/oder die Bremstrommel sind hierbei mit einer zur Achse und/oder dem Rad, insbesondere Radelement, zumindest teilweise korrespondierenden Rotationsgeschwindigkeit, insbesondere Drehzahl, antreibbar. Innerhalb der Bremseinheit, insbesondere Bremstrommel, ist zumindest ein Bremselement bevorzugt das bei einer Betätigung den drehbaren Teil der Bremseinheit, insbesondere die Bremstrommel und/oder das Distanzelement, zumindest teilweise verzögert. Die Verzögerung ist hierbei durch die Reibung des zumindest einen betätigbaren Bremselementes und der Bremstrommel realisierbar. Besonders vorteilhaft ist hierbei, dass das zumindest eine verschleißende Bremselement, insbesondere zu Instandsetzungs- und/oder Wartungszwecken, besonders gut zugänglich ist.

Erfindungsgemäß ist eine als Trommelbremse und/oder Scheibenbremse ausgebildete Bremseinheit besonders bevorzugt.

In einer besonders bevorzugten Weiterbildung der erfindungsgemäßen Walze ist die zumindest eine Achse zumindest teilweise innerhalb der Bremseinheit, insbesondere Bremstrommel und/oder des Distanzelements und/oder Ankerelementes, angeordnet. Die Achse ist hierbei zumindest teilweise in die Bremseinheit, vorzugsweise bis zu einer Lagerung und/oder der Schwinge, ragend ausgebildet. Infolge dieser Maßnahme ist in einer besonders einfachen Weise die Bremseinheit, insbesondere das Distanzelement und/oder Ankerelement und/oder die Bremstrommel, zu der zumindest einen Achse der Walze zentrierbar. Darüber hinaus ist mittels einer zumindest teilweise durch die Bremseinheit ragenden Achse eine weiter gesteigerte Platzeinsparung der erfindungsgemäßen Walze mit, vorzugsweise integrierter, Bremseinheit erreicht.

Bei einer weiteren besonders bevorzugten Ausführungsform der erfindungsgemäßen Walze, mit mehreren quer zur Fahrtrichtung ausgerichteten drehbaren Achsen sind zumindest zwei Achsen, vorzugsweise in Fahrtrichtung, zueinander versetzt angeordnet. Die Rotationsachsen der zueinander versetzen Achsen sind hierbei im Wesentlichen parallel zueinander ausgebildet. Mittels dieser Maßnahme sind beispielsweise Ablagerungen und/oder Verschmutzungen, insbesondere in Form von zumindest feuchtem Ackerboden, besonders gut reduzierbar und zusätzlicher Bauraum und/oder Abmessungen der Walze einsparbar. Besonders bevorzugt sind zueinander versetzte Achsen die um eine, insbesondere gemeinsame, Schwenkachse, die vorzugsweise in Fahrtrichtung vor oder hinter der Walze angeordnet ist, von einer in Betrieb- in eine Außerbetriebstellung verschwenkbar sind. Somit ist erreichbar, dass die Walze während der Außerbetriebstellung zumindest noch teilweise mit dem Untergrund in Kontakt steht. Dabei ist es außerdem vorteilhaft, wenn die Räder, insbesondere der Achsen, die zumindest eine Bremseinheit aufweisen, so angeordnet sind, dass diese mit dem Untergrund auch während der Außerbetriebstellung in Kontakt verbleiben. Mittels dieser Anordnung ist somit trotz einer Außerbetriebstellung, insbesondere Transportstellung, der Walze eine alternative oder zusätzliche Bremswirkung mittels der zumindest einen Bremseinheit erreichbar.

Die der Erfindung zugrunde liegende Aufgabe wird ferner innerhalb eines landwirtschaftlichen Arbeitsgeräts der eingangs genannten Art gelöst, wobei die Walze nach zumindest einem der vorstehenden beschriebenen Ausführungsformen ausgebildet ist. Hinsichtlich der Vorteile und Modifikationen des erfindungsgemäßen landwirtschaftlichen Arbeitsgeräts wird zunächst auf die Vorteile und Modifikationen der erfindungsgemäßen Walze verwiesen.

Bei einer vorteilhaften Ausführungsform des erfindungsgemäßen landwirtschaftlichen Arbeitsgeräts, mit zusätzlich zumindest einem in Fahrtrichtung hinter der Walze angeordnetem Schar, insbesondere Säschar, ist das zumindest eine Schar, sind vorzugsweise mehrere Schare, innerhalb des Bearbeitungsstreifens zumindest eines Rads angeordnet. Die Breite des zumindest einen Rads, insbesondere Mantels, ist dabei derartig gewählt, dass die Breite dabei zumindest der Bearbeitungsbreite des zumindest einen Schars, vorzugsweise mehrerer Schare, entspricht. Somit ist eine besonders ökonomische Bearbeitung der landwirtschaftlichen Fläche erreicht, bei der zumindest nahezu nur der Bereich von zumindest einem Rad, insbesondere der Walze, überfahrbar und/oder bearbeitbar ist auf dem beispielsweise das granulare Material, insbesondere Saatgut und/oder Dünger, abgelegt wird.

Weitere Einzelheiten der Erfindung sind der Beispielsbeschreibung und den Zeichnungen zu entnehmen. Die Zeichnungen zeigen
- Fig.1: ein landwirtschaftliches Arbeitsgerät mit einer erfindungsgemäßen Walze nach Art eines Reifenpackers in einer perspektivischen Ansicht von hinten;
- Fig.2: die Walze aus Fig.1 in einer geschnittenen Detailansicht von oben; und
- Fig.3: die Walze und in Fahrtrichtung dahinter angeordneten Scharen Fig.1 in einer Ansicht von oben.

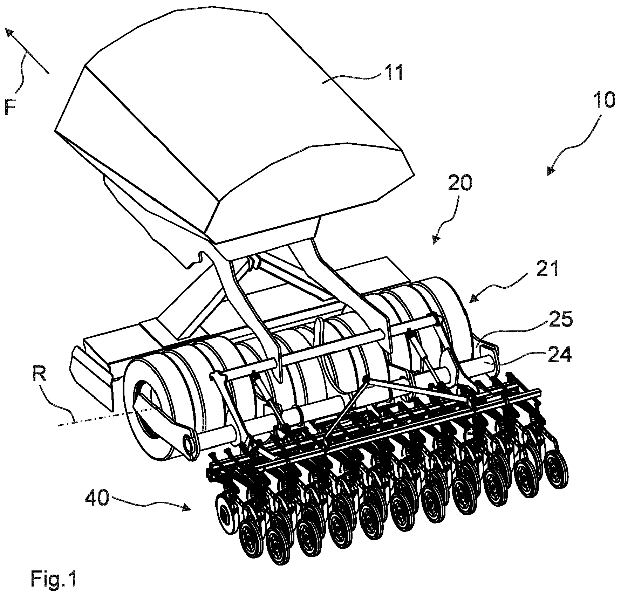

Ein landwirtschaftliches Arbeitsgerät 10, insbesondere Bodenbearbeitungsgerät und/oder eine Verteilmaschine, zur Bearbeitung einer landwirtschaftlichen Fläche ist in der Fig.1 gezeigt. Das landwirtschaftliche Arbeitsgerät 10 umfasst neben einem zentralen Vorratsbehälter 11, der zur Bevorratung von granularem Material, insbesondere Saatgut und/oder Dünger, dient, außerdem mehrere quer zur Fahrtrichtung F angeordnete Schare 40, insbesondere Säschare, die über zumindest eine nicht gezeigte Förderleitung mit dem Vorratsbehälter 11 verbindbar sind. Die Schare 40, insbesondere Säschare, sind dazu eingerichtet, dass aus dem Vorratsbehälter 11 förderbare granulare Material auf der landwirtschaftlichen Fläche abzulegen.

Darüber hinaus umfasst das landwirtschaftliche Arbeitsgerät 10 zur Vorbereitung der landwirtschaftlichen Fläche, insbesondere eines zuvor zumindest teilweise aufgelockerten Ackerbodens, zumindest eine, insbesondere in Fahrtrichtung F vor den Scharen angeordnete, unterteilte Walze 20 nach Art eines Reifenpackers.

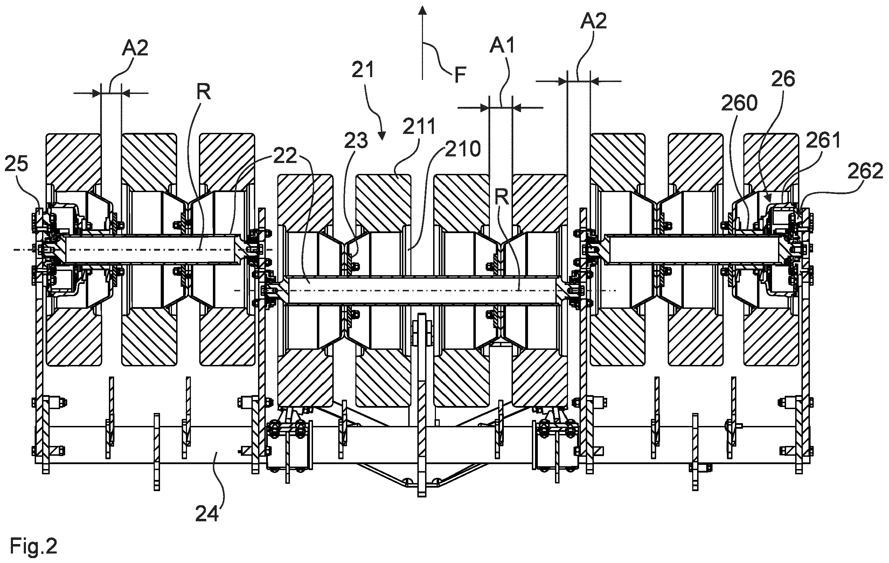

Die Fig.2 zeigt in einer geschnittenen Darstellung die Walze 20 mit mehreren in Reihe nebeneinander angeordneten Rädern 21, die jeweils zumindest ein inneres Radelement 210, insbesondere nach Art einer Radfelge, und zumindest ein von außen an dem Radelement 210 angeordneten Mantel 211 aufweisen. Die Räder 21 sind jeweils über zumindest ein Flanschelement 23 mit einer quer zur Fahrtrichtung F ausgerichteten drehbaren Achse 22, insbesondere drehfest, koppelbar. Somit ist die Walze 20, insbesondere sind die Räder 21, und/oder die Achse 22, insbesondere gemeinsam, um eine mit der zumindest einen Achse 22 korrespondierenden Rotationsachse R drehbar gelagert.

Wie in der Fig.2 außerdem zu sehen, weist das zumindest eine innere Radelement 210 zumindest eines Rads 21 eine größere Breite auf als der zumindest eine Mantel 211. Die Breite der inneren Radelemente 210 ist dabei derartig ausgebildet, dass die Mäntel 211 zumindest zweier gemeinsam an einem Flanschelement 23 koppelbarer Räder 21 zumindest teilweise mit einem ersten Abstand A1 zueinander, insbesondere quer zur Fahrtrichtung F, beabstandet sind. Die Räder 21, insbesondere die inneren Radelemente 210, sind somit zumindest teilweise, insbesondere gegenüberliegend, aneinander anlegbar und über zumindest ein, insbesondere gemeinsames, Flanschelement 23 mit der Achse 22 koppelbar. Die, insbesondere gemeinsam, an zumindest einem Flanschelement 23 koppelbaren Räder 21 sind zumindest teilweise als Gleichteile ausgebildet und zu einem Radpaar zusammengefasst. Das Radpaar ist hierbei an einer Seite eines ersten auf der Achse angeordneten Flanschelementes 23 anlegbar, die von zumindest einem weiteren an der Achse angeordneten Flanschelement 23 abgewandt ist. Bei einer entsprechenden Länge der zumindest einen Achse 22, wie im mittleren Teil der Walze 20 dargestellt, sind somit mittels der zumindest zwei daran angeordneten Flanschelemente 23 zumindest vier Räder 21 mit der Achse 22 koppelbar. Alternative Ausführungsvarianten, insbesondere Längen, der Achse 22 sind in den äußeren Bereichen der Walze 20 sichtbar. Hierbei sind mittels zumindest zwei Flanschelementen 23 zumindest drei Räder 21 mit jeweils einer der Achsen 22 koppelbar.

Ferner umfasst die Walze 20 zumindest einen zweiten Abstand A2 mit dem wenigstens zwei jeweils einem Flanschelement 23 zugeordneter Mäntel 211 zueinander beabstandet sind. Hierbei können die Mäntel 211 der gleichen Achse 22 und/oder jeweils unterschiedlichen Achsen 22 zugeordnet sein. In dem gezeigten Ausführungsbeispiel entspricht der Abstand A2 zumindest im Wesentlichen dem ersten Abstand A1, wobei alternativ oder zusätzlich untereinander abweichende Abstände A1, A2 denkbar sind.

Darüber hinaus ist zumindest einer, insbesondere äußeren, Achse 22 zumindest eine Bremseinheit 26 zugeordnet die dazu eingerichtet ist, die Achse 22, insbesondere das Arbeitsgerät 10, zumindest teilweise zu verzögern. Hierbei ist die Bremseinheit 26 mit zumindest einer ersten Seite an zumindest einer Schwinge 25 und/oder mit einer zweiten Seite an zumindest einem Rad 21, insbesondere Radelement 210, und/oder Flanschelement 23 angeordnet. Ferner umfasst die Bremseinheit 26 zumindest ein, insbesondere zumindest teilweise starr, mit der Schwinge 25 gekoppeltes Ankerelement 262, zumindest eine an dem Ankerelement 262 angeordnete, insbesondere zumindest teilweise drehbare, Bremstrommel 261 und zumindest ein, insbesondere zumindest teilweise drehbares, Distanzelement 260 das mit zumindest einem Flanschelement 23 und/oder Rad 21, insbesondere Radelement 210, gekoppelt ist. Die Bremstrommel 261 ist dabei zumindest nahezu drehfest mit dem Distanzelement 260 verbunden. Darüber hinaus ist die Achse 22 zumindest teilweise innerhalb der Bremseinheit 26, insbesondere Bremstrommel 261 und/oder des Ankerelementes 262 und/oder Distanzelementes 260, angeordnet. Ferner ist das Distanzelement 260 derartig mit dem Rad 21, insbesondere dem Radelement 210, und/oder dem Flanschelement 23 verbunden, so dass die Rotationsgeschwindigkeit, insbesondere Drehzahl, des Distanzelementes 260 und/oder der Bremstrommel 261 zumindest nahezu mit dem des Rads 21, insbesondere Radelementes 210, und/oder des Flanschelementes 23 korrespondiert. Mittels einer bedarfsgerechten Steuerung und/oder Regelung kann somit die Rotationsgeschwindigkeit, insbesondere die Drehzahl, des rotierenden Rads 21 und/oder der Achse 22, insbesondere der gesamten Walze 20, in einer im Stand der Technik von Bremseinheiten 26 bekannten Weise zumindest teilweise verzögert werden. Die Bremseinheit 26 ist hierbei als Trommelbremse ausgebildet, wobei alternativ oder zusätzlich eine Scheibenbremse und/oder ein vergleichbares Bremssystem denkbar sind.

In einer zur gezeigten alternativen Ausführungsform ist das zumindest eine Distanzelement 260, insbesondere zumindest teilweise starr, mit der Schwinge 25 und/oder der Ankerplatte 261 und die zumindest eine Bremstrommel 261, insbesondere zumindest teilweise drehbar, mit zumindest einem Flanschelement 23 und/oder Rad 21, insbesondere Radelement 210, gekoppelt.

Die Abmessungen, insbesondere die Breite, des Radelementes 210 und/oder der Bremseinheit 26 ist erfindungsgemäß derartig ausgebildet, dass die Bremseinheit 26 zumindest teilweise, insbesondere nahezu vollständig, innerhalb des wenigstens eines inneren Radelementes 210 angeordnet ist. Die Bremseinheit 26 ist, insbesondere in radialer Richtung, nahezu vollständig vom inneren Radelement 210 umschlossen und somit besonders gut von äußeren Einflüssen geschützt.

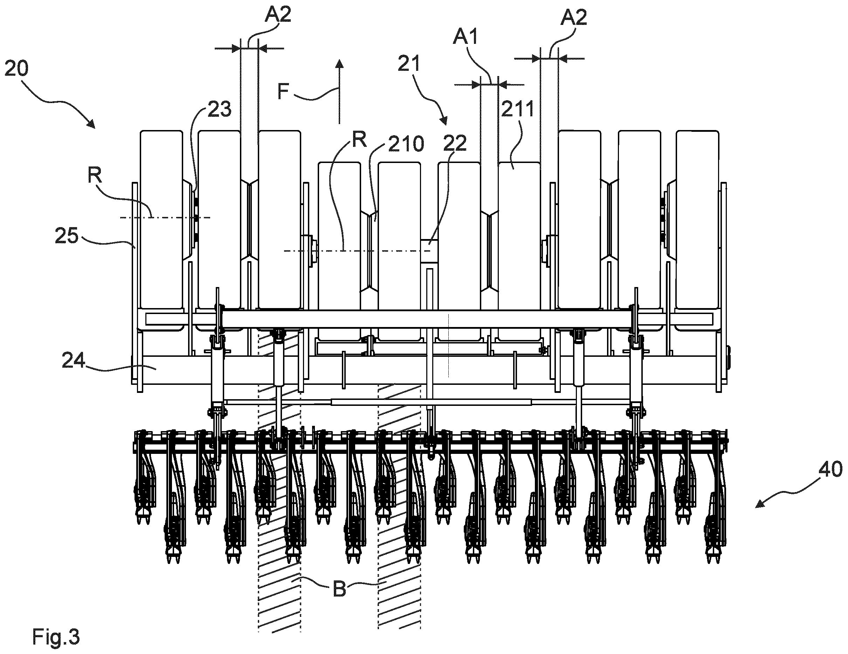

In der Fig.3 sind zu der Walze 20, insbesondere in Fahrtrichtung F dahinter, angeordnete Schare 40, insbesondere Säschare, in einer detaillierteren Darstellung gezeigt. Die Schare 40 sind dabei quer zur Fahrtrichtung F nebeneinander angeordnet und derartig zueinander beabstandet, dass zumindest ein Schar 40, insbesondere mehrere Schare 40, in einem Bearbeitungsstreifen B zumindest eines Rads 21 der Walze 20 angeordnet sind. Somit können wie in der dargestellten Ausführungsform beispielsweise gezeigt, zwei Schare 40 einem Rad 21 zugeordnet werden. Der Bearbeitungsstreifen B repräsentiert hierbei den bearbeiteten und/oder überfahrenen Bereich der landwirtschaftlichen Fläche, insbesondere des Ackerbodens, mittels zumindest eines Rads 21 der unterteilten Walze 20. Darüber hinaus sind bei der gezeigten Walze 20 zumindest zwei der drehbaren Achsen 22, insbesondere in Fahrtrichtung F, zueinander versetzt angeordnet.

### Bezugszeichenliste

- 10: landwirtschaftliches Arbeitsgerät
- 11: Vorratsbehälter
- 20: Walze nach Art eines Reifenpackers
- 21: Rad
- 210: inneres Radelement
- 211: Mantel
- 22: Achse
- 23: Flanschelement
- 24: Rahmen
- 25: Schwinge
- 26: Bremseinheit
- 260: Distanzelement
- 261: Bremstrommel
- 262: Ankerelement
- 40: Schar

- A1: erster Abstand
- A2: zweiter Abstand
- B: Bearbeitungsstreifen
- F: Fahrtrichtung
- R: Rotationsachse

## Patentansprüche

1. Unterteilte Walze (20) nach Art eines Reifenpackers für ein landwirtschaftliches Arbeitsgerät (10), insbesondere Bodenbearbeitungsgerät und/oder Verteilmaschine, umfassend mehrere in Reihe nebeneinander angeordnete Räder (21), wobei ein Rad (21) zumindest ein inneres Radelement (210) und zumindest einen von außen an einem Radelement (210) angeordneten Mantel (211) aufweist, zumindest eine quer zu einer Fahrtrichtung (F) ausgerichtete drehbare Achse (22) mit der zumindest ein Rad (21), vorzugsweise drehfest, über zumindest ein an der Achse (22) angeordnetes Flanschelement (23) koppelbar ist, zumindest einen Rahmen (24), wobei die zumindest eine Achse (22) mittels wenigstens einer Schwinge (25) mit dem Rahmen (24) verbunden ist, **dadurch gekennzeichnet, dass** zumindest ein inneres Radelement (210) zumindest eines Rads (21) eine größere Breite aufweist als der zumindest eine Mantel (211), dass zumindest zwei Räder (21) gemeinsam über zumindest ein Flanschelement (23) mit der Achse (22) koppelbar sind.

2. Walze (20) nach Anspruch 1, **dadurch gekennzeichnet, dass** die inneren Radelemente (210) von zumindest zwei Rädern (21) zumindest teilweise, vorzugsweise gegenüberliegend, aneinander anlegbar sind.

3. Walze (20) nach zumindest einem der vorgenannten Ansprüche, **dadurch gekennzeichnet, dass** die Breite zumindest eines inneren Radelementes (210) derartig ausgebildet ist, dass die Mäntel (211) zumindest zweier gemeinsam an einem Flanschelement (23) koppelbarer Räder (21) zumindest teilweise mit einem ersten Abstand (A1) zueinander, vorzugsweise quer zur Fahrtrichtung (F), beabstandet sind.

4. Walze (20) nach Anspruch 3, **dadurch gekennzeichnet, dass** zumindest zwei Mäntel (211), die wenigstens jeweils einem Flanschelement (23) zugeordnet sind, einen zweiten Abstand (A2) zueinander aufweisen, wobei der zweite Abstand (A2) zumindest im Wesentlichen dem ersten Abstand (A1) entspricht.

5. Walze (20) nach zumindest einem der vorgenannten Ansprüche, **dadurch gekennzeichnet, dass** zumindest eine Achse (22) zumindest zwei Flanschelemente (23) aufweist, wobei zumindest vier Räder (21) mit der zumindest einen Achse (22) koppelbar sind.

6. Walze (20) nach Anspruch 5, **dadurch gekennzeichnet, dass** zumindest zwei der zumindest vier Räder (21) zu einem an zumindest einem Flanschelement (23) anordenbaren Radpaar zusammengefasst sind, wobei das zumindest eine Radpaar an einer Seite eines ersten Flanschelementes (23) anlegbar ist, die von zumindest einem weiteren an der Achse (22) angeordneten Flanschelement (23) abgewandt ist.

7. Walze (20) nach zumindest einem der vorgenannten Ansprüche, **dadurch gekennzeichnet, dass** zumindest zwei Räder (21), insbesondere Radelemente (210), die vorzugsweise gemeinsam an zumindest einem Flanschelement (23) koppelbar sind, zumindest teilweise als Gleichteile ausgebildet sind.

8. Walze (20) nach zumindest einem der vorgenannten Ansprüche, **dadurch gekennzeichnet, dass** zumindest einer Achse (22) zumindest eine Bremseinheit (26) zugeordnet ist die dazu eingerichtet ist, die Achse (22) zumindest teilweise zu verzögern, dass die Bremseinheit (26) mit einer ersten Seite an zumindest einer Schwinge (25) und/oder mit einer zweiten Seite an zumindest einem Rad (21), insbesondere Radelement (210), und/oder Flanschelement (23) angeordnet ist.

9. Walze (20) nach Anspruch 8, **dadurch gekennzeichnet, dass** die Bremseinheit (26) zumindest teilweise, vorzugsweise zumindest nahezu vollständig, innerhalb wenigstens eines inneren Radelementes (210) angeordnet ist.

10. Walze (20) nach zumindest einem der vorgenannten Ansprüche 8 - 9, **dadurch gekennzeichnet, dass** eine Bremseinheit (26) zumindest ein, vorzugsweise zumindest teilweise starr, mit der Schwinge (25) gekoppeltes Distanzelement (260) und/oder Ankerelement (262) und zumindest eine, vorzugsweise zumindest teilweise drehbare, Bremstrommel (261) die mit zumindest einem Flanschelement (23) und/oder Rad (21), insbesondere Radelement (210), gekoppelt ist umfasst.

11. Walze (20) nach zumindest einem der vorgenannten Ansprüche 8 - 9, **dadurch gekennzeichnet, dass** eine Bremseinheit (26) zumindest ein, vorzugsweise zumindest teilweise starr, mit der Schwinge (25) gekoppeltes Ankerelement (262) und zumindest eine, vorzugsweise zumindest teilweise drehbare, Bremstrommel (261) und/oder zumindest ein, vorzugsweise zumindest teilweise drehbares, Distanzelement (260), welche mit zumindest einem Flanschelement (23) und/oder Rad (21), insbesondere Radelement (210), gekoppelt sind umfasst.

12. Walze (20) nach zumindest einem der vorgenannten Ansprüche 8 - 11, **dadurch gekennzeichnet, dass** die zumindest eine Achse (22) zumindest teilweise innerhalb der Bremseinheit (26), insbesondere Bremstrommel (261) und/oder des Distanzelements (260) und/oder des Ankerelementes (262), angeordnet ist.

13. Walze (20) nach zumindest einem der vorgenannten Ansprüche und mit mehreren quer zur Fahrtrichtung (F) ausgerichteten drehbaren Achsen (22), **dadurch gekennzeichnet, dass** zumindest zwei Achsen (22), vorzugsweise in Fahrtrichtung (F), zueinander versetzt angeordnet sind.

14. Landwirtschaftliches Arbeitsgerät (10), insbesondere Bodenbearbeitungsgerät und/oder Verteilmaschine, mit zumindest einer unterteilten Walze (20) nach Art eines Reifenpackers, **dadurch gekennzeichnet, dass** die unterteilte Walze (20) nach einem der vorgenannten Ansprüche ausgebildet ist.

15. Landwirtschaftliches Arbeitsgerät (10) nach Anspruch 14 und mit zumindest einem in Fahrtrichtung (F) hinter der unterteilten Walze (20) angeordnetem Schar (40), insbesondere Säschar, **dadurch gekennzeichnet, dass** innerhalb eines Bearbeitungsstreifens (B) zumindest eines Rads zumindest ein Schar (40) angeordnet ist, vorzugsweise mehrere Schare (40) angeordnet sind.
